# EUROPEAN PATENT SPECIFICATION

(11) **EP 2 198 587 B1**
(45) Date of publication and mention of the grant of the patent: **10.07.2013**
(21) Application number: 07820711.5
(22) Date of filing: 28.09.2007
(51) Int. Cl.: H04L 29/06

(54) **FAILURE RECOVERY IN AN IP MULTIMEDIA SUBSYSTEM NETWORK**
AUSFALLWIEDERHERSTELLUNG IN EINEM IP-MULTIMEDIA-UNTERSYSTEM (IMS) NETZWERK
REPRISE APRÈS DÉFAILLANCE DANS UN RÉSEAU DE SOUS-SYSTÈME MULTIMÉDIA IP (IMS)

(43) Date of publication of application: 23.06.2010
(73) Proprietor: Telefonaktiebolaget L M Ericsson (publ), 164 83 Stockholm (SE)
(72) Inventor: PRZYBYSZ, Hubert, S-126 37 Hägersten (SE); BELINCHÓN VERGARA, Maria Carmen, E-28902 Getafe (madrid) (ES); FORSMAN, Timo, S-125 74 Älvsjö (SE); SCHUMACHER, Andreas, S-120 57 Årsta (SE)
(74) Representative: Lind, Robert
(86) International application number: PCT/EP2007/060324
(87) International publication number: WO 2009/039890

(56) References cited:
- WO-A-2006/136097
- US-A1- 2002 128 008

## Description

### Technical field

The present invention relates to failure recovery in an IP Multimedia Subsystem network and in particular to a method and apparatus for enabling recovery from failure of a Serving Call Session Control Function.

### Background

IP Multimedia services provide a dynamic combination of voice, video, messaging, data, etc. within the same session. By growing the number of basic applications and the media that it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packet switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for a specification of the network architecture.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 8). IMS provides key features to enrich the end-user person-to-person communication experience through the use of standardised IMS Service Enablers, which facilitate new rich person-to-person (client-to-client) communication services as well as person-to-content (client-to-servcr) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS (although other protocols such as Diameter are also used for network signalling).

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.229.

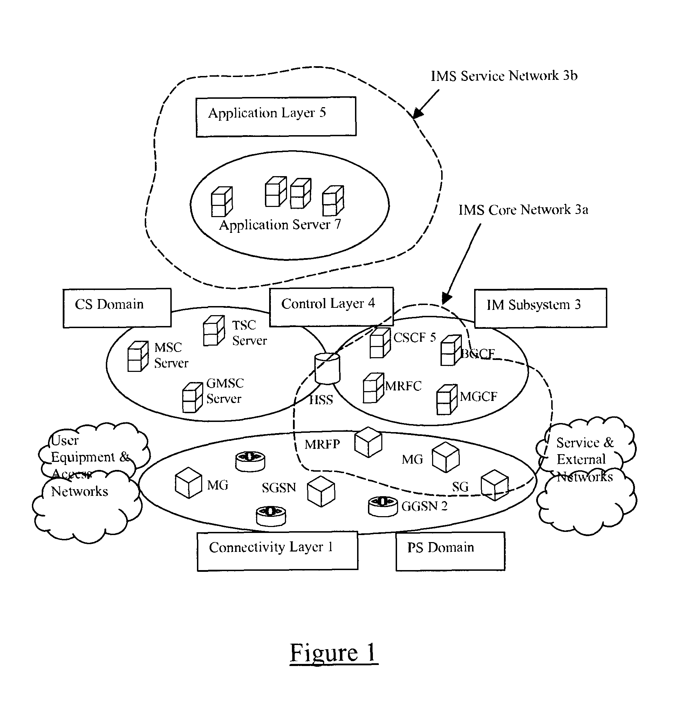

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a SIP request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services.

During the registration process, it is the responsibility of the I-CSCF to select an S-CSCF if an S-CSCF is not already selected. The I-CSCF receives the required S-CSCF capabilities from the home network's Home Subscriber Server (HSS), and selects an appropriate S-CSCF based on the received capabilities. The SIP REGISTER message is forwarded to the selected S-CSCF which adds its identity into the SIP Service-Route header in the 200 OK response. When the P-CSCF receives the 200 OK response from the S-CSCF, it learns the S-CSCF identity from the Service-Route header. When a registered user subsequently sends a SIP request to the IMS, the P-CSCF is able to forward the request to the selected S-CSCF. It is noted that S-CSCF allocation is also carried out for a user by the I-CSCF in the case where the user is called by another party, and the user is not currently allocated in an S-CSCF. This is referred to as the "terminating" call case. For the terminating call case, S-CSCF allocation is temporary and the UE must subsequently register with the IMS in order to initiate further calls.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is returned by the AS to the S-CSCF, it is forwarded on towards its final destination, or forwarded to another AS if this is indicated in the IFCs.

Current IMS Core specifications do not include procedures for the recovery to a consistent state after a failure in a network element. Specifically, S-CSCF failure is only considered in the case of initial registration (i.e. if an I-CSCF is unable to contact a selected S-CSCF, it is able to select and alternative). Whilst consideration has been given to this problem (see 3GPP SA2, CT1 and CT4), the solutions proposed have generally suffered from the problem of the potential double assignment of S-CSCFs for the same IMS Subscription and the loss of registration state. A work item covering this failure case has been created and the study requirements arc defined in 3GPP TS 23.820 v0.1.0 (C4-070890). It is expected that failure recover will be provided for in TS 29.329 Release 8.

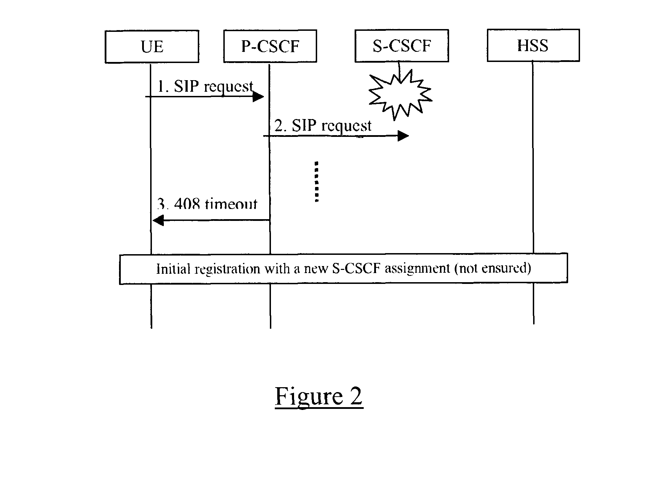

Failures of S-CSCFs can be short term (temporary) or can be long term (permanent). In the case of a permanent failure, the P-CSCF will return an error message (408 timeout) to the UE in the event that no response is received from a selected S-CSCF after a threshold number of reattempts is reached. This is illustrated in Figure 2 where the process is initiated by the UE sending a SIP request to the P-CSCF. It is currently not specified what how a UE should react to the timeout message. One possibility is that the UE will react, after some predefined period, e.g. 24 hours, by attempting a further registration. This behaviour is not however ensured.

WO2006/136097 describes a method of facilitating recovery from the failure of a S-CSCF within an IMS network and which involves the selection of an alternative S-CSCF by an I-CSCF.

### Summary

It is an object of the present invention to provide a mechanism for recovering from the failure of an S-CSCF following the allocation of that S-CSCF during IMS registration of the UE. This object is achieved by sending from the P-CSCF to the UE a re-register message which forces the UE to perform a re-registration with the IMS.

According to a first aspect of the present invention there is provided a method of facilitating recovery from the failure of a Serving Call Session Control Function within an IP Multimedia Subsystem network. The method comprises receiving at a Proxy Call Session Control Function a SIP request sent by a User Equipment possessing an identity previously registered with the IP Multimedia Subsystem network and for which a given Serving Call Session Control Function was selected. The Proxy Call Session Control Function determines that said given Serving Call Session Control Function has failed or is otherwise unreachable, and sends a re-registration message to said user equipment, receipt of said re-registration message at the user equipment forcing the user equipment to perform a registration procedure with the IP Multimedia Subsystem network.

Embodiments of the present invention ensure that the failure of an S-CSCF does not result in the loss of IMS service to the user equipment, and ensures that user equipment can respond to an S-CSCF failure in a predictable manner.

Said Proxy Call Session Control Function may include within the re-registration message a delay value, the delay value causing said user equipment to delay initiation re-registration for the specified delay. Alternatively, said Proxy Call Session Control Function may include within the re-registration message a delay value, the delay value causing said user equipment to delay a resending of said SIP request for the specified delay, following successful IP Multimedia Subsystem registration. Both of these approaches will tend to result in the spreading of the signalling load over time, following S-CSCF failure within an IMS network.

According to one embodiment of the invention, the method may comprise receiving said re-registration message at said user equipment and subsequently performing a registration procedure with the IP Multimedia Subsystem network. At said user equipment, an indication that the previously allocated Serving Call Session Control Function has failed (and optionally an identification of the failed Serving Call Session Control Function) can be included within a SIP Register message initiating said registration procedure, thus allowing an Interrogating Call Session Control Function of the IP Multimedia Subsystem network to send a request to a Home Subscriber Server for Serving Call Session Control Function capabilities, said request indicating/identifying the failed Serving Call Session Control Function.

This embodiment has the advantage that repeat signalling between the I-CSCF and the failed S-CSCF can be avoided. The Register request sent by the UE to the I-CSCF immediately results in selection of a new S-CSCF.

According to a second aspect of the present invention there is provided apparatus configured to operate as a Proxy Call Session Control Function within an IP Multimedia Subsystem network. The apparatus comprises:
an input for receiving a SIP request sent by a User Equipment;
means for identifying a Serving Call Session Control Function already allocated to an identity associated with said user equipment, and for determining that the allocated Serving Call Session Control Function has failed or is otherwise unreachable; and
means for sending a re-registration message to said user equipment, said re-registration message being specified to force the user equipment to perform a re-registration with the IP Multimedia Subsystem network.

According to a third aspect of the present invention there is provided apparatus configured to operate as an Interrogating Call Session Control Function within an IP Multimedia Subsystem network. The apparatus comprises:
an input for receiving a SIP Register message from user equipment;
means for determining whether or not said Register message contains an indication that a previously allocated Serving Call Session Control Function has failed; and
means for sending a request for Serving Call Session Control Function capabilities to a Home Subscriber Server, the request including an indication that a previously allocated Serving Call Session Control Function has failed if said Register message contained such an indication.

According to a fourth aspect of the present invention there is provided user equipment configured to provide user access to services facilitated by an IP Multimedia Subsystem network. The user equipment is arranged in use to perform an IP Multimedia Subsystem network registration resulting in allocation of a Serving Call Session Control Function to the user equipment, to send a SIP request towards the IP Multimedia Subsystem network, to receive, as a result of a failure of the allocated Serving Call Session Control Function, a re-register message from a Proxy Call Session Control Function, and to respond to receipt of said re-register message by performing a re-registration with the IP Multimedia Subsystem network.

### Brief description of the drawings

Figure 1, discussed hereinbefore, illustrates schematically the integration of an IP Multimedia Subsystem into a 3G mobile communications system;
Figure 2 illustrates IMS signalling associated with an S-CSCF failure;
Figure 3 illustrates IMS signalling associated with a possible solution to the problem of S-CSCF failure;
Figure 4 illustrates IMS signalling associated with a possible solution to the problem of S-CSCF failure according to an embodiment of the present invention; and
Figure 5 is a simplified schematic diagram illustrating the functional components of a Proxy Call Session Control Function according to an embodiment of the invention.

### Detailed description

It will be appreciated that the existing mechanisms provide for the recovery from an S-CSCF failure during a registration procedure. It will also be appreciated that recovery from a failure during a terminating call case is already provided for as the I-CSCF is necessarily included within the SIP request path. In the following, the problem of recovering from an S-CSCF failure during an originating call case is addressed.

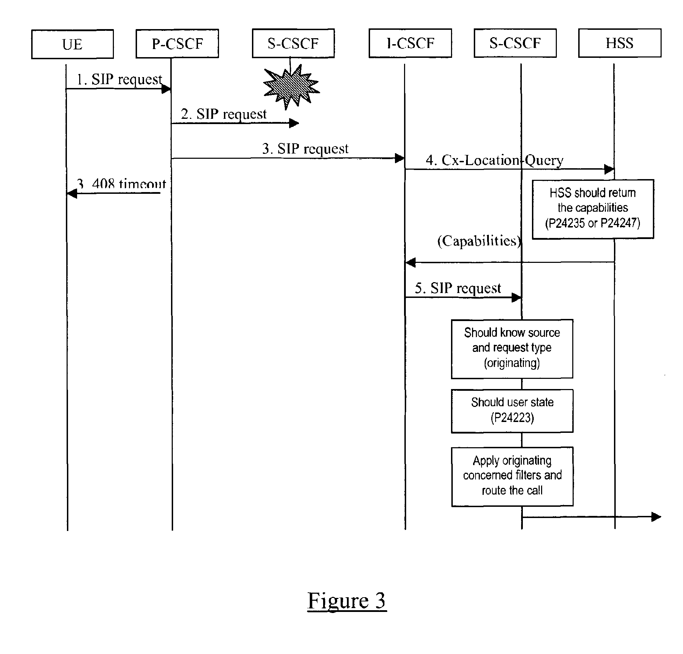

Referring to the signalling diagram of Figure 3, assume that a UE 1 is already registered with the IMS network and has been allocated an S-CSCF 2. At step 1, the UE sends a SIP request (e.g. a SIP INVITE) towards the IMS network. The request is routed first to a P-CSCF 3 according to standard IMS routing policy. During the registration procedure, the P-CSCF would have been informed of the S-CSCF address to allow it to forward the request to the S-CSCF at that address. Assume further that, in the period between registration and the sending of the SIP request, the S-CSCF has failed, and is no longer reachable from the P-CSCF. This state must be detected by the P-CSCF. A number of different mechanisms to achieve this detection arc available. For example:
a) The P-CSCF may have prior knowledge that a S-CSCF is currently unavailable as a result of a network management system;
b) The P-CSCF may have prior knowledge that a S-CSCF is currently unavailable as a result of the P-CSCF itself monitoring the S-CSCF, e.g. by means of a "heartbeat" mechanism;
c) The P-CSCF may attempt to send the SIP request over reliable transport (e.g. TCP or SCTP), but determines that it is not possible to establish the transport connection;
d) The P-CSCF may attempt to send the request over unreliable transport (e.g. UDP) and receives an unreachable indication from the transport network, such as an ICMP message with a destination unreachable error indication;
e) The P-CSCF may send the SIP request, with a timer timing out whilst the P-CSCF awaits a response. This is the case illustrated by step 2) of Figure 3.

It is proposed here to add to the relevant IMS standard (3GPP TS 24.229) a new SIP error response, referred to here as SIP "Re-Register". Upon detection by the P-CSCF that the S-CSCF is unavailable [using one of the mechanisms a) to e) above], the P-CSCF returns the new error response to the UE (step 3). Receipt of the error response at the UE causes the UE to initiate a repeat registration procedure. Assuming implementation of currently specified procedures at the I-CSCF, re-registration will almost certainly cause the I-CSCF to select once again the same failed S-CSCF. However, in the absence of a response from that S-CSCF, the ICSCF will select an alternative S-CSCF and registration will proceed. The newly selected S-CSCF may recover data associated with the UE and lost by the failed S-CSCF.

The P-CSCF may optionally include within the Re-register response an indication to the UE to initiate the new registration with a given delay, possibly defining the delay or a delay range. This provides a mechanism for the P-CSCF to spread the load of incoming SIP requests towards the network and to avoid signalling overloads in the case of major network failures. Another option for similar situations proposed here is for the P-CSCF to be able to add an indication to UE to delay re-attempt of the SIP INVITE (or other request) following re-registration.

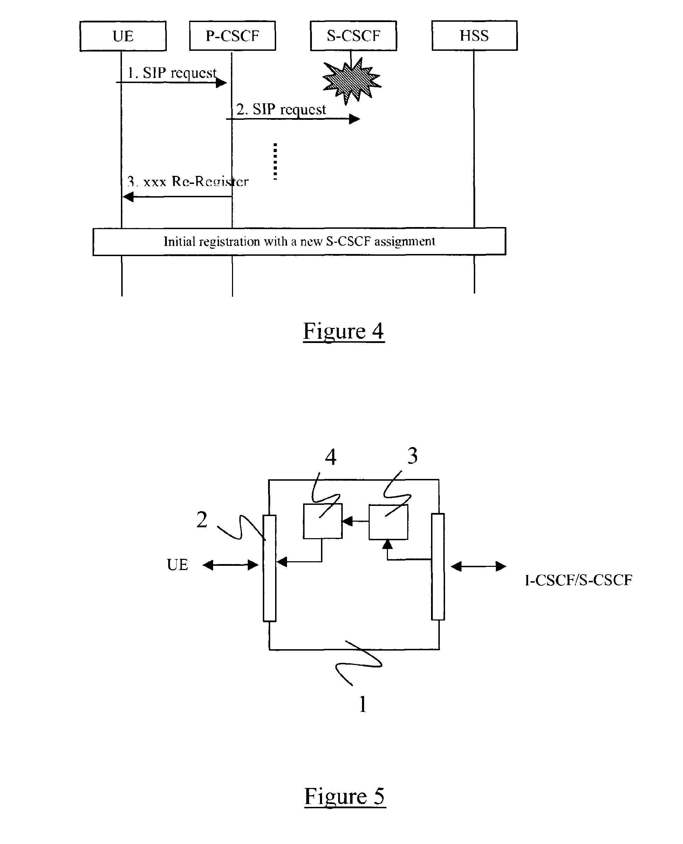

Figure 5 illustrates in extremely simplified form a P-CSCF 1 embodying the present invention. SIP requests are received from a UE at an input 2. A processing means 3 determines, e.g. as a result of a lack of response from the selected S-CSCF, that the S-CSCF has failed. A further processing means 4 returns a Re-Register SIP message to the UE.

It will be appreciated by the person of skill in the art that various modifications may be made to the above described embodiments without departing from the scope of the present invention. For example, as a UE can implicitly learn from receipt of a Re-register SIP message that the previously allocated S-CSCF has failed, it could include in the Register request an indication that the S-CSCF has failed. The I-CSCF may use this indication to directly reselect a new S-CSCF, avoiding the need for the I-CSCF to send the request to the failed S-CSCF in the first instance.

## Claims

1. A method of facilitating recovery from the failure of a Serving Call Session Control Function within an IP Multimedia Subsystem network, the method comprising:
receiving at a Proxy Call Session Control Function a SIP request sent by a User Equipment possessing an identity previously registered with the IP Multimedia Subsystem network and for which a given Serving Call Session Control Function was selected;
**characterised by** the steps of
determining at said Proxy Call Session Control Function that said given Serving Call Session Control Function has failed or is otherwise unreachable; and
sending a re-registration message from the Proxy Call Session Control Function to said user equipment, receipt of said re-registration message at the user equipment forcing the user equipment to perform a registration procedure with the IP Multimedia Subsystem network.

2. A method according to claim 1, said Proxy Call Session Control Function including within the re-registration message a delay value, the delay value causing said user equipment to delay initiation re-registration for the specified delay.

3. A method according to claim 1, said Proxy Call Session Control Function including within the re-registration message a delay value, the delay value causing said user equipment to delay a resending of said SIP request for the specified delay, following successful IP Multimedia Subsystem registration.

4. A method according to any one of the preceding claims and comprising receiving said re-registration message at said user equipment and subsequently performing a registration procedure with the IP Multimedia Subsystem network.

5. A method according to claim 4 and comprising, at said user equipment, including within a SIP Register message initiating said registration procedure and indication that the previously allocated Serving Call Session Control Function has failed.

6. A method according to claim 5 and comprising, at said user equipment, including within said SIP Register message and identification of the failed Serving Call Session Control Function.

7. A method according to claim 5 or 6 and comprising, upon receipt of said SIP Register message at an Interrogating Call Session Control Function of the IP Multimedia Subsystem network, sending a request from the Interrogating Call Session Control Function to a Home Subscriber Server for Serving Call Session Control Function capabilities, said request indicating/identifying the failed Serving Call Session Control Function.

8. Apparatus configured to operate as a Proxy Call Session Control Function within an IP Multimedia Subsystem network, the apparatus comprising:
an input for receiving a SIP request sent by a User Equipment;
**characterised by**
means for identifying a Serving Call Session Control Function already allocated to an identity associated with said user equipment, and for determining that the allocated Serving Call Session Control Function has failed or is otherwise unreachable; and
means for sending a re-registration message to said user equipment, said re-registration message being specified to force the user equipment to perform a re-registration with the IP Multimedia Subsystem network.

9. Apparatus configured to operate as an Interrogating Call Session Control Function within an IP Multimedia Subsystem network, the apparatus comprising:
an input for receiving a SIP Register message from user equipment;
**characterised by** means for determining whether or not said Register message contains an indication that a previously allocated Serving Call Session Control Function has failed; and
means for sending a request for Serving Call Session Control Function capabilities to a Home Subscriber Server, the request including an indication that a previously allocated Serving Call Session Control Function has failed if said Register message contained such an indication.

10. User Equipment configured to provide user access to services facilitated by an IP Multimedia Subsystem network, the user equipment being arranged in use to perform an IP Multimedia Subsystem network registration resulting in allocation of a Serving Call Session Control Function to the user equipment, to send a SIP request towards the IP Multimedia Subsystem network, **characterised in that** it is further configured to receive, as a result of a failure of the allocated Serving Call Session Control Function, a re-register message from a Proxy Call Session Control Function, and to respond to receipt of said re-register message by performing a re-registration with the IP Multimedia Subsystem network.

## Patentansprüche

1. Verfahren zur Erleichterung der Wiederherstellung vom Ausfall einer versorgenden Anrufsitzungs-Steuerfunktion innerhalb eines IP-Multimedia-Untersystem-Netzwerks, das Verfahren umfassend:
Empfangen, an einer Proxy-Anrufsitzungs-Steuerfunktion, einer SIP-Anforderung, gesandt von einer Benutzerausrüstung, die eine Identität besitzt, die vorher bei dem IP-Multimedia-Untersystem-Netzwerk registriert wurde und für die eine gegebene versorgende Anrufsitzungs-Steuerfunktion ausgewählt wurde;
**gekennzeichnet durch** die folgenden Schritte
Bestimmen, an der Proxy-Anrufsitzungs-Steuerfunktion, dass die gegebene versorgende Anrufsitzungs-Steuerfunktion ausgefallen oder anderweitig nicht erreichbar ist; und
Senden einer Neuregistrierungsnachricht von der Proxy-Anrufsitzungs-Steuerfunktion an die Benutzerausrüstung, wobei Empfang der Neuregistrierungsnachricht an der Benutzerausrüstung die Benutzerausrüstung zwingt, eine Registrierungsprozedur bei dem IP-Multimedia-Untersystem-Netzwerk durchzuführen.

2. Verfahren nach Anspruch 1, wobei die Proxy-Anrufsitzungs-Steuerfunktion innerhalb der Neuregistrierungsnachricht einen Verzögerungswert aufnimmt, wobei der Verzögerungswert bewirkt, dass die Benutzerausrüstung die Einleitung der Neuregistrierung um die spezifizierte Verzögerung verzögert.

3. Verfahren nach Anspruch 1, wobei die Proxy-Anrufsitzungs-Steuerfunktion innerhalb der Neuregistrierungsnachricht einen Verzögerungswert aufnimmt, wobei der Verzögerungswert bewirkt, dass die Benutzerausrüstung folgend auf die erfolgreiche IP-Multimedia-Untersystem-Registrierung ein Neusenden der SIP-Anforderung um die spezifizierte Verzögerung verzögert.

4. Verfahren nach einem der vorstehenden Ansprüche und umfassend, die Neuregistrierungsnachricht an der Benutzerausrüstung zu empfangen und anschließend eine Registrierungsprozedur bei dem IP-Multimedia-Untersystem-Netzwerk durchzuführen.

5. Verfahren nach Anspruch 4 und umfassend, an der Benutzerausrüstung, innerhalb einer SIP-Registrierungsnachricht, die die Registrierungsprozedur einleitet, eine Angabe aufzunehmen, dass die vorher zugewiesene versorgende Anrufsitzungs-Steuerfunktion ausgefallen ist.

6. Verfahren nach Anspruch 5 und umfassend, an der Benutzerausrüstung, innerhalb der SIP-Registrierungsnachricht eine Angabe der ausgefallenen versorgenden Anrufsitzungs-Steuerfunktion aufzunehmen.

7. Verfahren nach Anspruch 5 oder 6 und umfassend, nach Empfang der SIP-Registrierungsnachricht an einer abfragenden Anrufsitzungs-Steuerfunktion des IP-Multimedia-Untersystem-Netzwerks, Senden einer Anforderung von der abfragenden Anrufsitzungs-Steuerfunktion an einen Heimteilnehmerserver nach Fähigkeiten der versorgenden Anrufsitzungs-Steuerfunktion, wobei die Anforderung die ausgefallene versorgende Anrufsitzungs-Steuerfunktion angibt/identifiziert.

8. Gerät, konfiguriert zum Operieren als eine Proxy-Anrufsitzungs-Steuerfunktion innerhalb eines IP-Multimedia-Untersystem-Netzwerks, das Gerät umfassend:
einen Eingang zum Empfangen einer SIP-Anforderung, gesandt von einer Benutzerausrüstung;
**gekennzeichnet durch**
Mittel zum Identifizieren einer versorgenden Anrufsitzungs-Steuerfunktion, die bereits einer Identität zugewiesen wurde, die mit der Benutzerausrüstung assoziiert ist, und zum Bestimmen, dass die zugewiesene versorgende Anrufsitzungs-Steuerfunktion ausgefallen oder anderweitig nicht erreichbar ist; und
Mittel zum Senden einer Neuregistrierungsnachricht an die Benutzerausrüstung, wobei die Neuregistrierungsnachricht spezifiziert ist, um die Benutzerausrüstung zu zwingen, eine Neuregistrierungsprozedur bei dem IP-Multimedia-Untersystem-Netzwerk durchzuführen.

9. Gerät, konfiguriert zum Operieren als eine abfragende Anrufsitzungs-Steuerfunktion innerhalb eines IP-Multimedia-Untersystem-Netzwerks, das Gerät umfassend:
einen Eingang zum Empfangen einer SIP-Registrierungsnachricht von einer Benutzerausrüstung;
**gekennzeichnet durch** Mittel zum Bestimmen, ob die Registrierungsnachricht eine Angabe, dass eine vorher zugewiesene versorgende Anrufsitzungs-Steuerfunktion ausgefallen ist, enthält oder nicht; und
Mittel zum Senden einer Anforderung nach Fähigkeiten einer versorgenden Anrufsitzungs-Steuerfunktion an einen Heimteilnehmerserver, wobei die Anforderung eine Angabe enthält, dass eine vorher zugewiesene versorgende Anrufsitzungs-Steuerfunktion ausgefallen ist, wenn die Registrierungsnachricht eine derartige Angabe enthielt.

10. Benutzerausrüstung, konfiguriert zum Bereitstellen von Benutzerzugang zu Diensten, erleichtert durch ein IP-Multimedia-Untersystem-Netzwerk, wobei die Benutzerausrüstung angeordnet ist, um eine IP-Multimedia-Untersystem-Netzwerk-Registrierung durchzuführen, die in einer Zuweisung einer versorgenden Anrufsitzungs-Steuerfunktion an die Benutzerausrüstung resultiert, um eine SIP-Anforderung hin zu dem IP-Multimedia-Untersystem-Netzwerk zu senden, **dadurch gekennzeichnet, dass** sie ferner konfiguriert ist, um, als ein Resultat eines Ausfalls der zugewiesenen versorgenden Anrufsitzungs-Steuerfunktion, eine Neuregistrierungsnachricht von einer Proxy-Anrufsitzungs-Steuerfunktion zu empfangen und auf den Empfang der Neuregistrierungsnachricht durch Durchführen einer Neuregistrierung bei dem IP-Multimedia-Untersystem-Netzwerk zu reagieren.

## Revendications

1. Procédé destiné à faciliter une reprise suite à la défaillance d'une fonction de desserte de commande de session d'appel au sein d'un réseau de sous-système multimédia IP, le procédé consistant à :
recevoir, au niveau d'une fonction de serveur mandataire de commande de session d'appel, une demande de protocole SIP envoyée par un équipement d'utilisateur possédant une identité préalablement enregistrée auprès du réseau de sous-système multimédia IP et pour laquelle une fonction de desserte de commande de session d'appel donnée a été sélectionnée ;
**caractérisé par** les étapes ci-dessous consistant à :
déterminer, au niveau de ladite fonction de serveur mandataire de commande de session d'appel, que ladite fonction de desserte de commande de session d'appel donnée est défaillante ou est inaccessible ; et
envoyer un message de réenregistrement, de la fonction de serveur mandataire de commande de session d'appel audit équipement d'utilisateur, la réception dudit message de réenregistrement au niveau de l'équipement d'utilisateur forçant l'équipement d'utilisateur à mettre en oeuvre une procédure d'enregistrement auprès du réseau de sous-système multimédia IP.

2. Procédé selon la revendication 1, dans lequel ladite fonction de serveur mandataire de commande de session d'appel inclut dans le message de réenregistrement une valeur de retard, la valeur de retard amenant ledit équipement d'utilisateur à retarder un réenregistrement d'initiation pour le délai spécifié.

3. Procédé selon la revendication 1, dans lequel ladite fonction de serveur mandataire de commande de session d'appel inclut dans le message de réenregistrement une valeur de retard, la valeur de retard amenant ledit équipement d'utilisateur à retarder une réémission de ladite demande de protocole SIP pour le délai spécifié, suite à la réussite de l'enregistrement de sous-système multimédia IP.

4. Procédé selon l'une quelconque des revendications précédentes, consistant à recevoir ledit message de réenregistrement au niveau dudit équipement d'utilisateur et à mettre en oeuvre subséquemment une procédure d'enregistrement auprès du réseau de sous-système multimédia IP.

5. Procédé selon la revendication 4, consistant à, au niveau dudit équipement d'utilisateur, inclure au sein d'un message d'enregistrement de protocole SIP initiant ladite procédure d'enregistrement une indication selon laquelle la fonction de desserte de commande de session d'appel précédemment affectée est défaillante.

6. Procédé selon la revendication 5 consistant à, au niveau dudit équipement d'utilisateur, inclure au sein dudit message d'enregistrement de protocole SIP une identification de la fonction de desserte de commande de session d'appel défaillante.

7. Procédé selon la revendication 5 ou 6, consistant à, suite à la réception dudit message d'enregistrement de protocole SIP au niveau d'une fonction d'interrogation de commande de session d'appel du réseau de sous-système multimédia IP, envoyer une demande, de la fonction d'interrogation de commande de session d'appel à un serveur d'abonné domestique, concernant des capacités de fonction de desserte de commande de session d'appel, ladite demande indiquant/identifiant la fonction de desserte de commande de session d'appel défaillante.

8. Dispositif configuré de manière à opérer en tant que fonction de serveur mandataire de commande de session d'appel dans un réseau de sous-système multimédia IP, le dispositif comprenant :
une entrée pour recevoir une demande de protocole SIP envoyée par un équipement d'utilisateur ;
**caractérisé par** :
un moyen pour identifier une fonction de desserte de commande de session d'appel déjà affectée à une identité associée audit équipement d'utilisateur, et pour déterminer que la fonction de desserte de commande de session d'appel affectée est défaillante ou est inaccessible ; et
un moyen pour envoyer un message de réenregistrement audit équipement d'utilisateur, ledit message de réenregistrement étant spécifié en vue de forcer l'équipement d'utilisateur à mettre en oeuvre un réenregistrement auprès du réseau de sous-système multimédia IP.

9. Dispositif configuré de manière à opérer en tant que fonction d'interrogation de commande de session d'appel dans un réseau de sous-système multimédia IP, le dispositif comprenant :
une entrée pour recevoir un message d'enregistrement de protocole SIP provenant d'un équipement d'utilisateur,
**caractérisé par** un moyen pour déterminer si ledit message d'enregistrement contient ou non une indication selon laquelle une fonction de desserte de commande de session d'appel précédemment affectée est défaillante ; et
un moyen pour envoyer une demande concernant des capacités de fonction de desserte de commande de session d'appel à un serveur d'abonné domestique, la demande incluant une indication selon laquelle une fonction de desserte de commande de session d'appel précédemment affectée est défaillante lorsque ledit message d'enregistrement contenait une telle indication.

10. Équipement d'utilisateur configuré de manière à fournir un accès d'utilisateur à des services facilités par un réseau de sous-système multimédia IP, l'équipement d'utilisateur étant agencé, en fonctionnement, de manière à mettre en oeuvre un enregistrement de réseau de sous-système multimédia IP entraînant l'affectation d'une fonction de desserte de commande de session d'appel à l'équipement d'utilisateur, à envoyer une demande de protocole SIP au réseau de sous-système multimédia IP, **caractérisé en ce qu'**il est en outre configuré de manière à recevoir, à la suite d'une défaillance de la fonction de desserte de commande de session d'appel affectée, un message de réenregistrement, en provenance d'une fonction de serveur mandataire de commande de session d'appel, et à répondre à une réception dudit message de réenregistrement en mettant en oeuvre un réenregistrement auprès du réseau de sous-système multimédia IP.
